# EUROPÄISCHE PATENTANMELDUNG

(11) **EP 3 912 845 A1**
(43) Veröffentlichungstag der Anmeldung: **24.11.2021**
(21) Anmeldenummer: 21174101.2
(22) Anmeldetag: 17.05.2021
(51) Int. Cl.: B60L 5/24, B60L 5/18, B60L 5/08, B60L 5/32

(54) **WIPPE FÜR EINEN STROMABNEHMER EINES FAHRZEUGS**

(30) Priorität: 19.05.2020 AT 504392020
(71) Anmelder: Siemens Mobility Austria GmbH, 1210 Wien (AT)
(72) Erfinder: Reichardt, Walter, 7091 Breitenbrunn (AT); Saliger, Christian, 1130 Wien (AT); Flois, Christopher, 1020 Wien (AT); Wressnigg, Thomas, 1050 Wien (AT)
(74) Vertreter: Deffner, Rolf

(57) **Zusammenfassung**

Der Erfindung bezieht sich auf eine Wippe für einen Stromabnehmer eines Fahrzeugs, mit zumindest einer ersten Schleifleiste (12), welche mit einer Lageranordnung gekoppelt ist, sowie mit einem auf einer ersten Seite angeordneten ersten Auflaufhornmodul (28) und einem auf einer zweiten Seite angeordneten zweiten Auflaufhornmodul (29), welche fest oder mittels einer Aktuatoranordnung beweglich mit der Lageranordnung verbunden sind.
Es wird vorgeschlagen, dass zumindest ein auf der ersten Seite angeordnetes drittes Auflaufhornmodul (30) und ein auf der zweiten Seite angeordnetes viertes Ablaufhornmodul (31) mittels der Aktuatoranordnung beweglich mit der Lageranordnung verbunden sind, wobei das erste Auflaufhornmodul (28), das zweite Auflaufhornmodul (29), das dritte Auflaufhornmodul (30) und das vierte Auflaufhornmodul (31) unabhängig von der zumindest ersten Schleifleiste (12) mit der Lageranordnung verbunden sind.

Dadurch wird eine flexibel variierbare Wippengeometrie erzielt.

## Beschreibung

Die Erfindung betrifft eine Wippe für einen Stromabnehmer eines Fahrzeugs, insbesondere eines Schienenfahrzeugs, mit zumindest einer ersten Schleifleiste, welche mit einer Lageranordnung mit einer ersten Lagervorrichtung und einer zweiten Lagervorrichtung gekoppelt ist, sowie mit einem auf einer bezüglich einer aus einer Fahrzeuglängsachse und einer Fahrzeughochachse gebildeten Fahrzeuglängsebene ersten Seite angeordneten ersten Auflaufhornmodul und einem auf einer bezüglich der Fahrzeuglängsebene zweiten Seite angeordneten zweiten Auflaufhornmodul, welche fest oder mittels einer Aktuatoranordnung beweglich mit der Lageranordnung verbunden sind, wobei die Lageranordnung mit einem Stromabnehmergestänge verbindbar ist.

Elektrisch betriebene Fahrzeuge weisen häufig Stromabnehmer (z.B. Einholm- oder Scherenstromabnehmer etc.) auf, mittels welchen eine Stromabnahme von einem Fahrdraht oder von einer Stromschiene etc. sowie eine Versorgung von elektrischen Antrieben der Fahrzeuge mit Elektrizität erfolgt.

Bei Schienenfahrzeugen, welche auf Strecken mit voneinander verschiedenen Oberleitungsinfrastrukturen verkehren, sind besondere Anforderungen an Anordnung und Auslegung von Stromabnehmern zu berücksichtigen.

Da sich Oberleitungsinfrastrukturen von Bahnnetz zu Bahnnetz unterscheiden können, sind in der Europäischen Norm (EN) 50367 Stromabnehmereigenschaften definiert, welche für einen sicheren Betrieb im jeweiligen Netz erfüllt sein müssen. Diese Stromabnehmereigenschaften betreffen unter anderem geometrische Parameter der Wippe.

Um die für das jeweilige Netz erforderlichen geometrischen Parameter der Wippe zu erfüllen, weisen Schienenfahrzeuge im netzüberschreitenden Verkehr häufig mehrere Stromabnehmer auf, deren Wippen an die jeweiligen netzspezifischen Anforderungen angepasst sind.

Es sind auch Stromabnehmer mit einstellbarer Wippengeometrie bekannt.

Aus dem Stand der Technik ist beispielsweise die DE 10 2008 056 542 A1 bekannt, in welcher ein Stromabnehmer mit einer Wippe für ein Schienenfahrzeug beschrieben ist, deren Breite angepasst werden kann. Der Stromabnehmer weist zwei Auflaufhörner auf, welche symmetrisch zueinander und entlang einer gemeinsamen Achse quer zu einer Fahrtrichtung beweglich sind, wobei mittels einer fluidischen Aktuatoranordnung und einer Rückstellfederanordnung ein Abstand zwischen den Auflaufhörnern eingestellt wird.

Weiterhin zeigt die DE 296 01 731 U1 einen Stromabnehmer für Fahrzeuge, welcher Endhörner sowie zumindest eine Schleifleiste aufweist, die quer zu einer Fahrtrichtung ausgerichtet sind. Die Endhörner können in ihrem Abstand zueinander, die Schleifleiste in ihrer Länge eingestellt werden.

Die genannten Ansätze weisen in ihren bekannten Formen den Nachteil auf, dass die Auflaufhörner und Endhörner lediglich quer zur Fahrtrichtung verstellbar sind und aus den Auflaufhörner und Endhörnern gebildete Formkonturen nicht veränderbar sind.

Der Erfindung liegt die Aufgabe zugrunde, eine gegenüber dem Stand der Technik weiterentwickelte Wippe anzugeben, welche eine größere Flexibilität bei einer Anpassung geometrischer Wippeneigenschaften aufweist.

Erfindungsgemäß wird diese Aufgabe gelöst mit einer Wippe der eingangs genannten Art, bei der zumindest ein auf der ersten Seite angeordnetes drittes Auflaufhornmodul und ein auf der zweiten Seite angeordnetes viertes Auflaufhornmodul mittels der Aktuatoranordnung beweglich mit der Lageranordnung verbunden sind, wobei das erste Auflaufhornmodul, das zweite Auflaufhornmodul, das dritte Auflaufhornmodul und das vierte Auflaufhornmodul unabhängig von der zumindest ersten Schleifleiste mit der Lageranordnung verbunden sind.

Dadurch kann beispielsweise eine aus dem ersten Auflaufhornmodul und dem zweiten Auflaufhornmodul gebildete erste Formkontur durch eine aus dem dritten Auflaufhornmodul und dem vierten Auflaufhornmodul gebildete zweite Formkontur ersetzt, ergänzt oder überlagert werden. Durch diese Maßnahme wird eine flexibel einstell- und änderbare Wippengeometrie erzielt, bei welcher Auflaufhörner im Betrieb des Fahrzeugs gewechselt werden können. Auflaufhörner oder Auflaufhornkonturen können aus dem ersten Auflaufhornmodul, dem zweiten Auflaufhornmodul, dem dritten Auflaufhornmodul und dem vierten Auflaufhornmodul modular, d.h. baukastenartig gebildet oder kombiniert werden.

Durch eine Einstellbarkeit verschiedener Wippengeometrien in Abhängigkeit von entsprechenden nationalen oder regionalen Erfordernissen und Vorschriften kann ein geographisches Einsatzspektrum des Fahrzeugs erweitert werden, ohne dass hierzu die Anzahl der auf dem Fahrzeug vorgesehenen Stromabnehmer erhöht werden muss. Dadurch werden Fahrzeugmassen verringert und verfügbare Bauräume (z.B. auf einem Dach des Fahrzeugs) vergrößert.

Ist auf dem Fahrzeug eine Mehrzahl an Stromabnehmern vorgesehen und ist ein Verzicht auf einzelne Stromabnehmer nicht möglich oder nicht gewünscht, so können diese Stromabnehmer mit erfindungsgemäßen Wippen ausgerüstet werden, wodurch eine Redundanz bewirkt und eine betriebliche Sicherheit gesteigert werden.

Sind das erste Auflaufhornmodul und das zweite Auflaufhornmodul fest mit der Lageranordnung verbunden, so fungieren diese auch als Redundanz zu dem dritten Auflaufhornmodul und dem vierten Auflaufhornmodul, welche beweglich mit der Lageranordnung verbunden sind. Dies kann beispielsweise günstig sein, wenn die Aktuatoranordnung versagt und das dritte Auflaufhornmodul und das vierte Auflaufhornmodul in einem deaktivierten Zustand verharren. Das dritte Auflaufhornmodul und das vierte Auflaufhornmodul können unmittelbar oder mittelbar mit der Lageranordnung verbunden sein. Bei einer mittelbaren Verbindung sind das dritte Auflaufhornmodul und das vierte Auflaufhornmodul über mit der Lageranordnung verbundene Komponenten mit der Lageranordnung verbunden.

Wie erwähnt sind das erste Auflaufhornmodul, das zweite Auflaufhornmodul, das dritte Auflaufhornmodul und das vierte Auflaufhornmodul unabhängig von der ersten Schleifleiste, d.h. beispielsweise nicht über die erste Schleifleiste oder gegebenenfalls vorgesehene weitere Schleifleisten, mit der Lageranordnung verbunden. Das bedeutet, dass das erste Auflaufhornmodul, das zweite Auflaufhornmodul, das dritte Auflaufhornmodul und das vierte Auflaufhornmodul nicht als Teile der ersten Schleifleiste oder etwaiger weiterer Schleifleisten ausgebildet sind.

Eine vorteilhafte Lösung wird erzielt, wenn die Aktuatoranordnung getrennt von der zumindest ersten Schleifleiste mit der Lageranordnung verbunden ist.

Die Aktuatoranordnung ist somit unabhängig von der Schleifleiste mit der Lageranordnung verbunden. Federungsvorgänge der Schleifleiste über eine mit der Lageranordnung verbundene Wippenfederanordnung werden von der Aktuatoranordnung nicht beeinflusst. Lagerreaktionen aus einer Gewichtskraft der Aktuatoranordnung werden unmittelbar in die Lageranordnung eingeleitet und belasten die Schleifleiste und die Wippenfederanordnung nicht.

Die Aktuatoranordnung kann wiederum unmittelbar oder mittelbar mit der Lageranordnung verbunden sein. Bei einer mittelbaren Verbindung ist die Aktuatoranordnung über eine mit der Lageranordnung verbundene Komponente mit der Lageranordnung verbunden.

Um die geometrischen Eigenschaften der erfindungsgemäßen Wippe zu verändern, ist es hilfreich, wenn zumindest das dritte Auflaufhornmodul zumindest in Richtung einer Fahrzeugquerachse verschieblich mit der Lageranordnung verbunden ist.

In diesem Zusammenhang kann es auch günstig sein, wenn zumindest das dritte Auflaufhornmodul zumindest in Richtung der Fahrzeughochachse verschieblich mit der Lageranordnung verbunden ist.

Weiterhin ist es vorteilhaft, wenn zumindest das dritte Auflaufhornmodul um eine Parallele der Fahrzeuglängsachse drehbar mit der Lageranordnung verbunden ist.

Es kann auch hilfreich sein, wenn zumindest das dritte Auflaufhornmodul um eine Parallele der Fahrzeughochachse drehbar mit der Lageranordnung verbunden ist.

Translations- und Rotationsbewegungen des dritten Auflaufhornmoduls, des vierten Auflaufhornmoduls und, sofern beweglich gelagert, des ersten Auflaufhornmoduls sowie des zweiten Auflaufhornmoduls können auch miteinander kombiniert werden, wodurch flexible Einstellmöglichkeiten der erfindungsgemäßen Wippe erzielt werden. Eine hohe Flexibilität in Bezug auf Umschaltvorgänge zwischen unterschiedlichen Auflaufhornkonturen wird demnach erreicht, wenn zumindest das dritte Auflaufhornmodul schwenkbar mit der Lageranordnung verbunden ist.

Ein einfacher Wechsel zwischen unterschiedlichen Auflaufhörnern wird ermöglicht, wenn zumindest aus dem ersten Ablaufhornmodul und dem dritten Auflaufhornmodul jeweils ein eigenes Auflaufhorn gebildet ist, wobei aus dem ersten Auflaufhornmodul ein erstes Auflaufhorn gebildet ist und aus dem dritten Auflaufhornmodul ein zweites Auflaufhorn gebildet ist.

Hierbei wird ein Wechsel zwischen dem ersten Auflaufhorn und dem zweiten Auflaufhorn durch Ein- und Ausschiebevorgänge, Ein- und Ausdrehvorgänge oder Ein- und Ausschwenkvorgänge des dritten Auflaufhornmoduls und, sofern dieses beweglich gelagert ist, des ersten Auflaufhornmoduls bewirkt. Dadurch wird das erste Auflaufhornmodul in einen inaktiven Zustand und das dritte Auflaufhornmodul in einen aktiven Zustand oder das erste Auflaufhornmodul in einen aktiven Zustand und das dritte Auflaufhornmodul in einen inaktiven Zustand übergeführt.

Ist das erste Auflaufhornmodul fest mit der Lageranordnung verbunden, so wird dieses mittels Überlagerung durch das bewegliche dritte Auflaufhornmodul in einen inaktiven Zustand übergeführt. Durch Verschieben, Verdrehen oder Schwenken des dritten Auflaufhornmoduls in einen inaktiven Zustand wird die Überlagerung des ersten Auflaufhornmoduls aufgehoben und das erste Auflaufhornmodul in einen aktiven Zustand gesetzt.

Es kann jedoch auch vorteilhaft sein, wenn zumindest aus dem ersten Auflaufhornmodul und dem dritten Auflaufhornmodul eine Auflaufhornkontur zusammengesetzt ist.

Durch diese Maßnahme ist das erste Auflaufhorn aus dem ersten Auflaufhornmodul und dem dritten Auflaufhornmodul gebildet und es wird eine hohe Flexibilität bei einer Bildung von Auflaufhornkonturen erzielt.

Eine günstige Lösung wird erreicht, wenn die Aktuatoranordnung zumindest einen fluidischen ersten Aktuator aufweist.

Dadurch können ohnehin in dem Fahrzeug vorgesehene fluidische Einrichtungen (z.B. Kompressoren, Leitungen etc. einer pneumatischen Bremse, Hydraulikaggregate etc.) zur Wippeneinstellung genutzt werden.

Ferner ist es hilfreich, wenn zumindest das dritte Auflaufhornmodul und das vierte Auflaufhornmodul in Endlagen verriegelbar ausgeführt sind und eine Endlagenüberwachungseinrichtung vorgesehen ist.

Durch diese Maßnahme wird sichergestellt, dass das dritte Auflaufhornmodul und das vierte Auflaufhornmodul in deren Endlagen (z.B. in dem aktiven oder inaktiven Zustand) verbleiben und sichere sowie unsichere Zustände detektiert werden können. Die Endlagenüberwachungseinrichtung wird mit der Wippe mitgeführt und ermöglicht somit eine kontinuierliche, d.h. von einer Stellung des Stromabnehmers unabhängige Endlagenüberwachung des dritten Auflaufhornmoduls und des vierten Auflaufhornmoduls.

Eine vorteilhafte Ausgestaltung erhält man, wenn zumindest das dritte Auflaufhornmodul und das vierte Auflaufhornmodul miteinander gekoppelt sind.

Dadurch können das dritte Auflaufhornmodul und das vierte Auflaufhornmodul durch einen gemeinsamen Aktuator betätigt werden. Somit kann die Anzahl für die erfindungsgemäße Wippe benötigter Aktuatoren reduziert werden.

Es ist ferner günstig, wenn zumindest eines der Auflaufhornmodule als Isolator ausgebildet ist.

Durch diese Maßnahme kann, angepasst an entsprechende Erfordernisse und Vorschriften auf einer Strecke oder in einem Streckennetz, ein isolierendes oder aber auch ein leitendes Auflaufhorn gebildet werden, wobei ein Aktivieren oder Deaktivieren des Isolators im Betrieb und während einer Fahrt des Fahrzeugs möglich ist.

Nachfolgend wird die Erfindung anhand von Ausführungsbeispielen näher erläutert.

Es zeigen beispielhaft:
- Fig. 1:: Eine schematische Darstellung eines beispielhaften Stromabnehmers mit einer beispielhaften ersten Ausführungsvariante einer erfindungsgemäßen Wippe als Seitenriss,
- Fig. 2:: Eine schematische Darstellung der beispielhaften ersten Ausführungsvariante einer erfindungsgemäßen Wippe als Seitenriss in einem ersten Geometriezustand, wobei ein erstes Auflaufhornmodul und ein zweites Auflaufhornmodul fest sowie ein drittes Auflaufhornmodul und ein viertes Auflaufhornmodul beweglich in Richtung einer Fahrzeugquerachse und einer Fahrzeughochachse mit einer Lageranordnung verbunden sind,
- Fig. 3:: Eine schematische Darstellung der beispielhaften ersten Ausführungsvariante einer erfindungsgemäßen Wippe als Seitenriss in einem zweiten Geometriezustand,
- Fig. 4:: Einen schematischen Ausschnitt aus einer beispielhaften zweiten Ausführungsvariante einer erfindungsgemäßen Wippe als Seitenriss in einem ersten Geometriezustand, mit einem beweglichen und einem fest verbundenen Auflaufhornmodul, wobei das bewegliche Auflaufhornmodul in Richtung einer Fahrzeugquerachse verschieblich ist,
- Fig. 5:: Einen schematischen Ausschnitt aus der beispielhaften zweiten Ausführungsvariante einer erfindungsgemäßen Wippe als Seitenriss in einem zweiten Geometriezustand,
- Fig. 6:: Einen schematischen Ausschnitt aus einer beispielhaften dritten Ausführungsvariante einer erfindungsgemäßen Wippe als Seitenriss in einem ersten Geometriezustand, mit einem beweglichen und einem fest verbundenen Auflaufhornmodul, wobei das bewegliche Auflaufhornmodul um eine Parallele einer Fahrzeuglängsachse drehbar ist,
- Fig. 7:: Einen schematischen Ausschnitt aus der beispielhaften dritten Ausführungsvariante einer erfindungsgemäßen Wippe als Seitenriss in einem zweiten Geometriezustand,
- Fig. 8:: Einen schematischen Ausschnitt aus einer beispielhaften vierten Ausführungsvariante einer erfindungsgemäßen Wippe als Grundriss in einem ersten Geometriezustand, mit zwei beweglichen Auflaufhornmodulen, welche in Richtung einer Fahrzeugquerachse verschieblich sind,
- Fig. 9:: Einen schematischen Ausschnitt aus der beispielhaften vierten Ausführungsvariante einer erfindungsgemäßen Wippe als Grundriss in einem zweiten Geometriezustand,
- Fig. 10:: Einen schematischen Ausschnitt aus einer beispielhaften fünften Ausführungsvariante einer erfindungsgemäßen Wippe als Seitenriss in einem ersten Geometriezustand, mit zwei miteinander gekoppelten, beweglichen Auflaufhornmodulen, welche um eine Parallele zu einer Fahrzeuglängsachse schwenkbar sind,
- Fig. 11:: Einen schematischen Ausschnitt aus der beispielhaften fünften Ausführungsvariante einer erfindungsgemäßen Wippe als Seitenriss in einem zweiten Geometriezustand,
- Fig. 12:: Einen schematischen Ausschnitt aus einer beispielhaften sechsten Ausführungsvariante einer erfindungsgemäßen Wippe als Seitenriss in einem ersten Geometriezustand, mit einem beweglichen und einem fest verbundenen Auflaufhornmodul, wobei das bewegliche Auflaufhornmodul um eine Parallele zu einer Fahrzeuglängsachse schwenkbar ist,
- Fig. 13:: Einen schematischen Ausschnitt aus der beispielhaften sechsten Ausführungsvariante einer erfindungsgemäßen Wippe als Seitenriss in einem zweiten Geometriezustand,
- Fig. 14:: Einen schematischen Ausschnitt aus einer beispielhaften siebenten Ausführungsvariante einer erfindungsgemäßen Wippe als Grundriss in einem ersten Geometriezustand, mit zwei miteinander gekoppelten, beweglichen Auflaufhornmodulen, welche um eine Parallele zu einer Fahrzeughochachse drehbar sind,
- Fig. 15:: Einen schematischen Ausschnitt aus der beispielhaften siebenten Ausführungsvariante einer erfindungsgemäßen Wippe als Grundriss in einem zweiten Geometriezustand,
- Fig. 16:: Einen schematischen Ausschnitt aus einer beispielhaften achten Ausführungsvariante einer erfindungsgemäßen Wippe als Seitenriss in einem ersten Geometriezustand, mit zwei beweglichen und einem fest verbundenen Auflaufhornmodul,
- Fig. 17:: Einen schematischen Ausschnitt aus der beispielhaften achten Ausführungsvariante einer erfindungsgemäßen Wippe als Seitenriss in einem zweiten Geometriezustand, wobei eine Auflaufhornkontur aus zwei beweglichen Auflaufhornmodulen gebildet ist, und
- Fig. 18:: Einen schematischen Ausschnitt aus einer beispielhaften Ausführungsvariante einer erfindungsgemäßen Wippe mit einem ersten Aktuator, einer Verriegelungseinrichtung und einer Endlagenüberwachungseinrichtung.

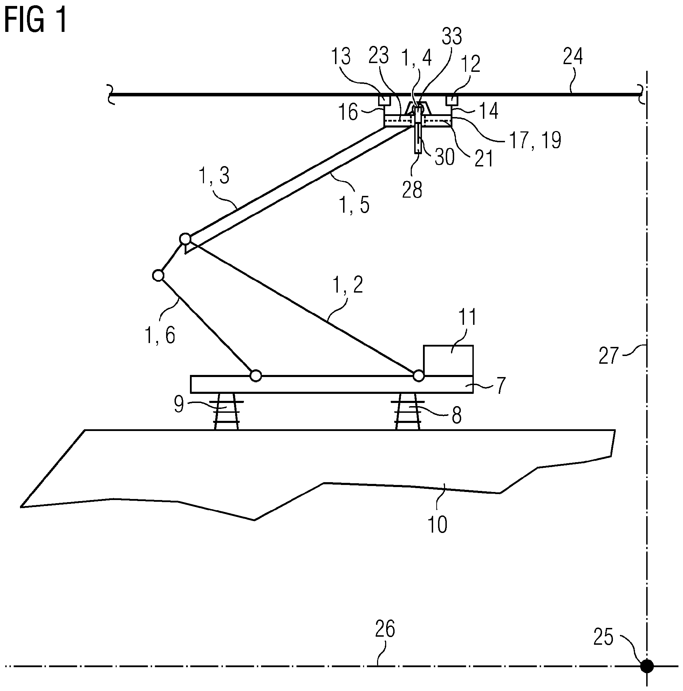

Ein in Fig. 1 dargestellter schematischer Seitenriss zeigt einen beispielhaften Stromabnehmer mit einem Stromabnehmergestänge 1, welches einen Unterarm 2, einen Oberarm 3, eine Scheitelstange 4, eine Parallelführungsstange 5 sowie eine Kuppelstange 6 aufweist. Der Unterarm 2 sowie die Kuppelstange 6 sind gelenkig mit einem Grundrahmen 7 verbunden, welcher über einen ersten Stützisolator 8, einen zweiten Stützisolator 9 sowie einen nicht sichtbaren dritten Stützisolator mit einem Dach 10 eines Schienenfahrzeugs verbunden ist. Zwischen dem Grundrahmen 7 und dem Unterarm 2 ist ein pneumatischer Hebeantrieb 11 zum Heben und Senken des Stromabnehmers vorgesehen.

Der Oberarm 3 ist gelenkig mit dem Unterarm 2 sowie gelenkig mit der Kuppelstange 6 verbunden, die Parallelführungsstange 5 gelenkig mit dem Unterarm 2.

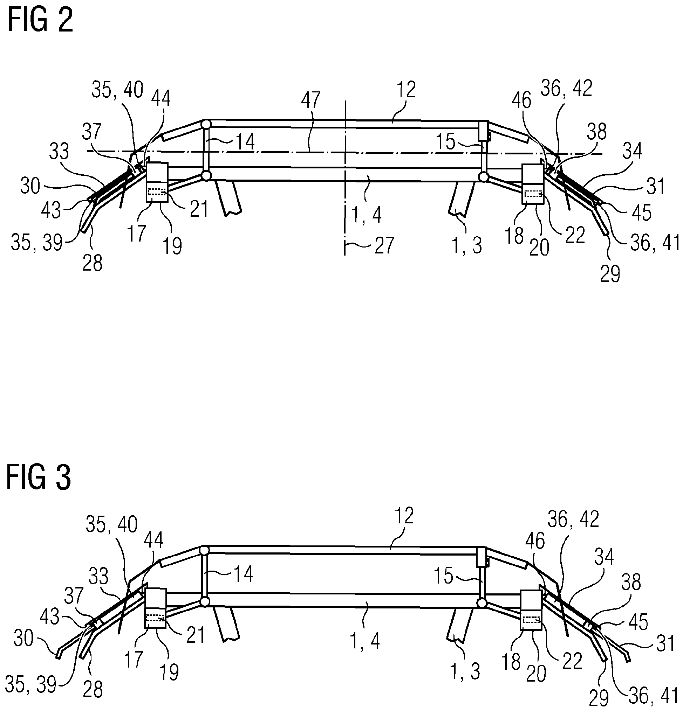

Auf das Stromabnehmergestänge 1 ist eine erfindungsgemäße Wippe aufgesetzt, welche eine erste Schleifleiste 12, eine zweite Schleifleiste 13, eine erste Hebelanordnung 14, eine in Fig. 2 sichtbare zweite Hebelanordnung 15 eine dritte Hebelanordnung 16 sowie eine nicht sichtbare vierte Hebelanordnung aufweist. Weiterhin umfasst die Wippe eine Lageranordnung mit einer ersten Lagervorrichtung 17 und einer in Fig. 2 sichtbaren zweiten Lagervorrichtung 18, über welche die Wippe gelenkig mit der Scheitelstange 4, d.h. mit dem Stromabnehmergestänge 1, verbunden ist.

Innerhalb eines ersten Gehäuses 19 der ersten Lagervorrichtung 17 und eines zweiten Gehäuses 20 der zweiten Lagervorrichtung 18 sind eine erste Torsionsfeder 21 und eine in Fig. 2 gezeigte zweite Torsionsfeder 22 sowie eine dritte Torsionsfeder 23 und eine nicht sichtbare vierte Torsionsfeder angeordnet, welche die erste Hebelanordnung 14, die zweite Hebelanordnung 15, die dritte Hebelanordnung 16 und die vierte Hebelanordnung einerseits sowie die erste Lagervorrichtung 17 und die zweite Lagervorrichtung 18 andererseits miteinander verbinden.

Die erste Schleifleiste 12 und die zweite Schleifleiste 13 sind über die erste Torsionsfeder 21, die zweite Torsionsfeder 22, die dritte Torsionsfeder 23 und die vierte Torsionsfeder federnd mit der Lageranordnung gekoppelt.

Die Wippe ist weiterhin gelenkig mit der Parallelführungsstange 5 verbunden und liegt über die erste Schleifleiste 12 und die zweite Schleifleiste 13, welche aus dem Stand der Technik bekannte, nicht dargestellte Kohleschleifstücke aufweisen, an einem Fahrdraht 24 an, wodurch das Schienenfahrzeug mit Elektrizität versorgt wird.

Die erste Schleifleiste 12 und die zweite Schleifleiste 13 sind parallel zu einer Fahrzeugquerachse 25, welche in Fig. 1 projizierend erscheint, ausgerichtet. Die erste Lagervorrichtung 17 und die zweite Lagervorrichtung 18 sind parallel zu einer Fahrzeuglängsachse 26 ausgerichtet, d.h. aufgrund der ersten Hebelanordnung 14, der zweiten Hebelanordnung 15, der dritten Hebelanordnung 16 und der vierten Hebelanordnung um 90° zu der ersten Schleifleiste 12 und der zweiten Schleifleiste 13 verdreht.

Die Wippe weist ein auf einer bezüglich einer aus der Fahrzeuglängsachse 26 und einer Fahrzeughochachse 27 gebildeten Fahrzeuglängsebene ersten Seite angeordnetes erstes Auflaufhornmodul 28 und ein auf einer bezüglich der Fahrzeuglängsebene zweiten Seite angeordnetes, in Fig. 2 sichtbares zweites Auflaufhornmodul 29 auf, welche fest mit der Lageranordnung verbunden sind. Das erste Auflaufhornmodul 28 ist mit der ersten Lagervorrichtung 17 verbunden, das zweite Auflaufhornmodul 29 mit der zweiten Lagervorrichtung 18.

Erfindungsgemäß ist es jedoch auch vorstellbar, dass das erste Auflaufhornmodul 28 und das zweite Auflaufhornmodul 29 beweglich mit der Lageranordnung verbunden sind.

Die Wippe umfasst weiterhin ein auf der ersten Seite angeordnetes drittes Auflaufhornmodul 30 und ein auf der zweiten Seite angeordnetes, in Fig. 2 sichtbares viertes Auflaufhornmodul 31, welche mittels einer Aktuatoranordnung beweglich mit der Lageranordnung verbunden sind. Das dritte Auflaufhornmodul 30 ist über das erste Auflaufhornmodul 28 mittelbar mit der ersten Lagervorrichtung 17 gekoppelt, das vierte Auflaufhornmodul 31 über das zweite Auflaufhornmodul 29 mittelbar mit der zweiten Lagervorrichtung 18. Erfindungsgemäß ist es jedoch auch denkbar, das dritte Auflaufhornmodul 30 und das vierte Auflaufhornmodul 31 unmittelbar, d.h. direkt mit der Lageranordnung zu verbinden.

Das erste Auflaufhornmodul 28, das zweite Auflaufhornmodul 29, das dritte Auflaufhornmodul 30 und das vierte Auflaufhornmodul 31 sind unabhängig von der ersten Schleifleiste 12 und der zweiten Schleifleiste 13 mit der Lageranordnung verbunden. Das bedeutet, dass das erste Auflaufhornmodul 28, das zweite Auflaufhornmodul 29, das dritte Auflaufhornmodul 30 und das vierte Auflaufhornmodul 31 nicht als Teile der ersten Schleifleiste 12 und der zweiten Schleifleiste 13 ausgebildet sind. Das erste Auflaufhornmodul 28, das zweite Auflaufhornmodul 29, das dritte Auflaufhornmodul 30 und das vierte Auflaufhornmodul 31 sind der ersten Schleifleiste 12 und der zweiten Schleifleiste 13 zwischengeordnet.

Die Aktuatoranordnung weist einen fluidischen ersten Aktuator 33 und einen in Fig. 2 sichtbaren fluidischen zweiten Aktuator 34 auf.

Der erste Aktuator 33 ist über das erste Auflaufhornmodul 28 mittelbar mit der ersten Lagervorrichtung 17 verbunden, der zweite Aktuator 34 über das zweite Auflaufhornmodul 29 mittelbar mit der zweiten Lagervorrichtung 18. Erfindungsgemäß ist es jedoch auch vorstellbar, den ersten Aktuator 33 und den zweiten Aktuator 34 unmittelbar mit der Lageranordnung zu verbinden.

Der erste Aktuator 33 betätigt das dritte Auflaufhornmodul 30, der zweite Aktuator 34 betätigt das vierte Auflaufhornmodul 31.

In Fig. 2 ist jene beispielhafte erste Ausführungsvariante einer erfindungsgemäßen Wippe eines Stromabnehmers eines Schienenfahrzeugs ausschnittsweise und als schematischer Seitenriss dargestellt, welche auch in Fig. 1 gezeigt ist. Es werden daher in Fig. 2 teilweise gleiche Bezugszeichen wie in Fig. 1 verwendet.

Im Unterschied zu Fig. 1 offenbart Fig. 2 eine um 90° gedrehte Ansicht der Wippe.

Eine erste Schleifleiste 12 ist über eine erste Hebelanordnung 14 und eine erste Torsionsfeder 21 gelenkig und federnd mit einer ersten Lagervorrichtung 17 verbunden sowie über eine zweite Hebelanordnung 15 und eine zweite Torsionsfeder 22 gelenkig und federnd mit einer zweiten Lagervorrichtung 18.

Die erste Torsionsfeder 21 ist von einem ersten Gehäuse 19 der ersten Lagervorrichtung 17 ummantelt, die zweite Torsionsfeder 22 von einem zweiten Gehäuse 20 der zweiten Lagervorrichtung 18.

Die erste Lagervorrichtung 17 und die zweite Lagervorrichtung 18 sind Komponenten einer Lageranordnung und als Wippenkästen ausgeführt.

Mit der Lageranordnung ist eine Scheitelstange 4 eines Stromabnehmergestänges 1 verbunden, welche sich zwischen der ersten Lagervorrichtung 17 und der zweiten Lagervorrichtung 18 erstreckt. Von dem Stromabnehmergestänge 1 ist in Fig. 2 auch ein Oberarm 3 ausschnittsweise gezeigt.

Die Wippe weist ein erstes Auflaufhornmodul 28, welches fest mit der ersten Lagervorrichtung 17 verbunden ist, sowie ein zweites Auflaufhornmodul 29, welches fest mit der zweiten Lagervorrichtung 18 verbunden ist, auf.

Weiterhin umfasst die Wippe ein drittes Auflaufhornmodul 30, welches mittels eines ersten Aktuators 33 einer Akuatoranordnung beweglich über das erste Auflaufhornmodul 28 mit der ersten Lagervorrichtung 17 verbunden ist, sowie ein viertes Auflaufhornmodul 31, welches mittels eines zweiten Aktuators 34 der Akuatoranordnung beweglich über das zweite Auflaufhornmodul 29 mit der zweiten Lagervorrichtung 18 verbunden ist.

Das erste Auflaufhornmodul 28 und das dritte Auflaufhornmodul 30 sind auf einer bezüglich einer aus einer in Fig. 1 sichtbaren Fahrzeuglängsachse 26 und einer ebenfalls in Fig. 1 gezeigten Fahrzeughochachse 27 gebildeten Fahrzeuglängsebene ersten Seite angeordnet, das zweite Auflaufhornmodul 29 und das vierte Auflaufhornmodul 31 auf einer bezüglich der Fahrzeuglängsebene zweiten Seite. In Bezug auf jene in Fig. 2 dargestellte Ansicht sind das erste Auflaufhornmodul 28 und das dritte Auflaufhornmodul 30 links an der Wippe vorgesehen, das zweite Auflaufhornmodul 29 und das vierte Auflaufhornmodul 31 rechts.

Der erste Aktuator 33 ist über das erste Auflaufhornmodul 28 mit der ersten Lagervorrichtung 17, der zweite Aktuator 34 über das zweite Auflaufhornmodul 29 mit der zweiten Lagervorrichtung 18 verbunden. Die Aktuatoranordnung weist keine Verbindungen zu der ersten Torsionsfeder 21 sowie zu der zweiten Torsionsfeder 22 auf und ist somit von der ersten Schleifleiste 12 und einer in Fig. 1 sichtbaren zweiten Schleifleiste 13 mechanisch entkoppelt. Die Aktuatoranordnung ist demnach unabhängig von der ersten Schleifleiste 12 und der zweiten Schleifleiste 13 mit der Lageranordnung verbunden.

Der erste Aktuator 33 und der zweite Aktuator 34 sind als pneumatische Aktuatoren mit Zylindern und Kolben ausgeführt, womit das dritte Auflaufhornmodul 30 und das vierte Auflaufhornmodul 31 fluidisch betätigt werden.

Erfindungsgemäß ist es jedoch auch möglich, dass das dritte Auflaufhornmodul 30 und das vierte Auflaufhornmodul 31 unmittelbar fluidisch betätigt werden. Diese können beispielsweise hohl ausgeführt sein und durch Füllen mit Druckluft und Entlüften pneumatisch entfaltet und komprimiert werden.

Der erste Aktuator 33 weist einen ersten Zylinder 35 auf, in welchem ein erster Kolben 37 geführt ist. Eine erste Kammer 39 des ersten Zylinders 35 ist durch den ersten Kolben 37 von einer zweiten Kammer 40 getrennt. Eine erste Druckluftleitung 43 speist die erste Kammer 39, eine zweite Druckluftleitung 44 die zweite Kammer 40.

Der zweite Aktuator 34 weist einen zweiten Zylinder 36 auf, in welchem ein zweiter Kolben 38 geführt ist. Eine dritte Kammer 41 des zweiten Zylinders 36 ist durch den zweiten Kolben 38 von einer vierten Kammer 42 getrennt. Eine dritte Druckluftleitung 45 speist die dritte Kammer 41, eine vierte Druckluftleitung 46 die vierte Kammer 42.

Die erste Druckluftleitung 43 und die zweite Druckluftleitung 44 sind über die erste Lagervorrichtung 17, die dritte Druckluftleitung 45 und die vierte Druckluftleitung 46 sind über die zweite Lagervorrichtung 18 in das hohl ausgebildete Stromabnehmergestänge 1 geführt und darüber mit einem in Fig. 1 gezeigten pneumatischen Hebeantrieb 11 verbunden. Über den Hebeantrieb 11 und dessen Regler werden die erste Druckluftleitung 43, die zweite Druckluftleitung 44, die dritte Druckluftleitung 45 und die vierte Druckluftleitung 46 sowie der erste Zylinder 35 und der zweite Zylinder 36 mit Druckluft gefüllt und entlüftet.

Erfindungsgemäß ist es jedoch auch denkbar, einen von dem Hebeantrieb 11 getrennten, unabhängigen Druckspeicher zur Versorgung der Wippe vorzusehen und die erste Druckluftleitung 43, die zweite Druckluftleitung 44, die dritte Druckluftleitung 45 sowie die vierte Druckluftleitung 46 damit zu verbinden.

Um jenen in Fig. 2 dargestellten ersten Geometriezustand der Wippe zu erreichen, wird in der ersten Kammer 39 und in der dritten Kammer 41 eine Druckerhöhung, in der zweiten Kammer 40 sowie in der vierten Kammer 42 eine Drucksenkung durchgeführt. In dem ersten Geometriezustand sind das dritte Auflaufhornmodul 30 und das vierte Auflaufhornmodul 31 eingefahren und somit in einem inaktiven Zustand. Ein erstes Wippenprofil mit einer ersten Wippenlänge von 1450 mm ist in dem ersten Geometriezustand durch das erste Auflaufhornmodul 28 und das zweite Auflaufhornmodul 29 eingestellt, welche in einem aktiven Zustand sind.

Ein zweiter Geometriezustand der Wippe, welcher in Fig. 3 dargestellt ist, wird eingestellt, indem in der ersten Kammer 39 und in der dritten Kammer 41 eine Drucksenkung und in der zweiten Kammer 40 sowie in der vierten Kammer 42 eine Druckerhöhung durchgeführt wird. Dadurch werden das dritte Auflaufhornmodul 30 und das vierte Auflaufhornmodul 31 in Richtung einer in Fig. 1 gezeigten Fahrzeugquerachse 25, welche parallel zu einer Wippenlängsachse 47 ausgerichtet ist, sowie in Richtung einer Fahrzeughochachse 27 verschoben. Das dritte Auflaufhornmodul 30 und das vierte Auflaufhornmodul 31 werden in Bezug auf jene in Fig. 2 gezeigte Ansicht also schräg nach unten bewegt.

In dem zweiten Geometriezustand weist die Wippe ein zweites Wippenprofil mit einer zweiten Wippenlänge von 1600 mm auf.

Das dritte Auflaufhornmodul 30 und das vierte Auflaufhornmodul 31 sind in einem aktiven Zustand.

In Fig. 3 ist jene beispielhafte erste Ausführungsvariante einer erfindungsgemäßen Wippe eines Stromabnehmers eines Schienenfahrzeugs als schematischer Seitenriss dargestellt, welche auch in Fig. 1 und Fig. 2 gezeigt ist. Es werden in Fig. 3 teilweise gleiche Bezugszeichen wie in Fig. 2 verwendet.

Im Unterschied zu Fig. 2, in welcher ein erster Geometriezustand der Wippe mit einem ersten Wippenprofil offenbart ist, zeigt Fig. 3 einen zweiten Geometriezustand der Wippe mit einem im Vergleich zu dem ersten Wippenprofil breiteren zweiten Wippenprofil. Wie im Zusammenhang mit Fig. 2 beschrieben, ist der zweite Geometriezustand durch Betätigung einer fluidischen Aktuatoranordnung und Verschiebung beweglich gelagerter Auflaufhornmodule eingestellt.

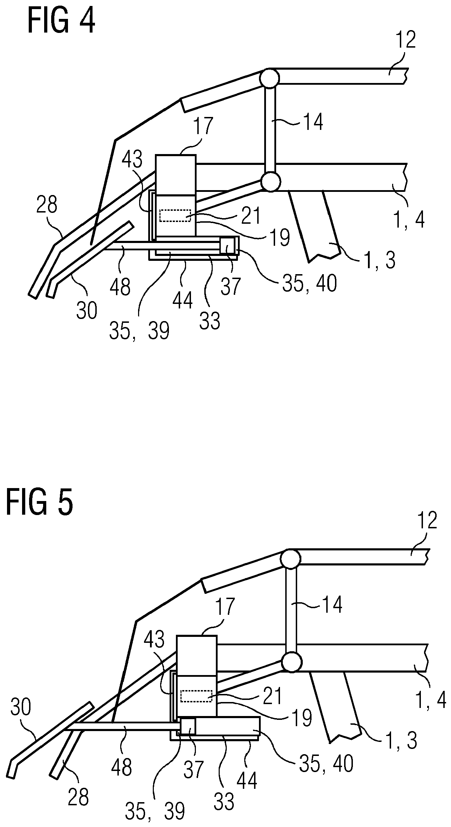

Fig. 4 zeigt ausschnittsweise eine beispielhafte zweite Ausführungsvariante einer erfindungsgemäßen Wippe eines Stromabnehmers eines Schienenfahrzeugs als schematischen Seitenriss.

Diese zweite Ausführungsvariante ähnelt jener beispielhaften ersten Ausführungsvariante einer erfindungsgemäßen Wippe, die in Fig. 1, Fig. 2 und Fig. 3 dargestellt ist. Es werden in Fig. 4 teilweise gleiche Bezugszeichen wie in Fig. 2 und Fig. 3 verwendet.

Im Unterschied zu der genannten ersten Ausführungsvariante weist die zweite Ausführungsvariante einer erfindungsgemäßen Wippe eine Aktuatoranordnung mit einem pneumatischen ersten Aktuator 33 auf, welcher auf einer Unterseite einer ersten Lagervorrichtung 17 einer Lageranordnung angeordnet ist. Mit der ersten Lagervorrichtung 17 sind weiterhin eine Scheitelstange 4 eines Stromabnehmergestänges 1 sowie, über eine erste Hebelanordnung 14, eine erste Schleifleiste 12 des Stromabnehmers verbunden.

Ferner sind ein erstes Auflaufhornmodul 28 und ein nicht sichtbares zweites Auflaufhornmodul fest mit der Lageranordnung verbunden.

Weiterhin sind ein drittes Auflaufhornmodul 30 und ein nicht sichtbares viertes Auflaufhornmodul mittels der Aktuatoranordnung beweglich mit der Lageranordnung verbunden. Das erste Auflaufhornmodul 28 und das dritte Auflaufhornmodul 30 sind auf jener in Fig. 4 dargestellten Ansicht links an der Wippe vorgesehen, das zweite Auflaufhornmodul und das vierte Auflaufhornmodul auf einer nicht dargestellten, gegenüberliegenden Seite.

Der erste Aktuator 33 weist einen ersten Zylinder 35 und einen ersten Kolben 37 auf. Mit dem ersten Kolben 37 einerseits und dem dritten Auflaufhorn 30 andererseits ist eine erste Führungsstange 48 fest verbunden. In Fig. 4 ist ein erster Geometriezustand der Wippe dargestellt. Eine erste Kammer 39 des ersten Zylinders 35 ist darin über eine erste Druckluftleitung 43 mit Druckluft gefüllt. Eine zweite Kammer 40 des ersten Zylinders 35 ist entlüftet. Das dritte Auflaufhornmodul 30 ist dadurch in einem eingefahrenen, inaktiven Zustand. Ein erstes Wippenprofil mit einer ersten Wippenlänge und einem ersten Konturverlauf ist in dem ersten Geometriezustand durch das erste Auflaufhornmodul 28 eingestellt.

Um die Wippe in einen zweiten Geometriezustand zu versetzen, wird die erste Kammer 39 des ersten Zylinders 35 entlüftet und die zweite Kammer 40 mit Druckluft gefüllt. Das dritte Auflaufhornmodul 30 wird dadurch parallel zu einer Querachse des Schienenfahrzeugs, wie sie beispielsweise in Fig. 1 für die erste Ausführungsvariante als Fahrzeugquerachse 25 gezeigt ist, in Richtung des ersten Auflaufhornmoduls 28 verschoben. In dem in Fig. 5 offenbarten zweiten Geometriezustand überlagert das dritte Auflaufhornmodul 30 das erste Auflaufhornmodul 28 unter einer Stufenbildung. Erfindungsgemäß ist es jedoch auch denkbar, dass das dritte Auflaufhornmodul 30 bündig mit dem ersten Auflaufhornmodul 28 abschließt.

In Fig. 5 ist ausschnittsweise jene beispielhafte zweite Ausführungsvariante einer erfindungsgemäßen Wippe als schematischer Seitenriss dargestellt, welche auch in Fig. 4 offenbart ist. Es werden daher in Fig. 5 gleiche Bezugszeichen wie in Fig. 4 verwendet.

Im Unterschied zu Fig. 4, in welcher ein erster Geometriezustand der Wippe mit einem ersten Wippenprofil offenbart ist, zeigt Fig. 5 einen zweiten Geometriezustand der Wippe mit einem im Vergleich zu dem ersten Wippenprofil breiteren zweiten Wippenprofil und einem von einem ersten Konturverlauf des ersten Wippenprofils abweichenden zweiten Konturverlauf. Wie im Zusammenhang mit Fig. 4 beschrieben, ist der zweite Geometriezustand durch Betätigung einer fluidischen Aktuatoranordnung und Verschiebung beweglich gelagerter Auflaufhornmodule eingestellt.

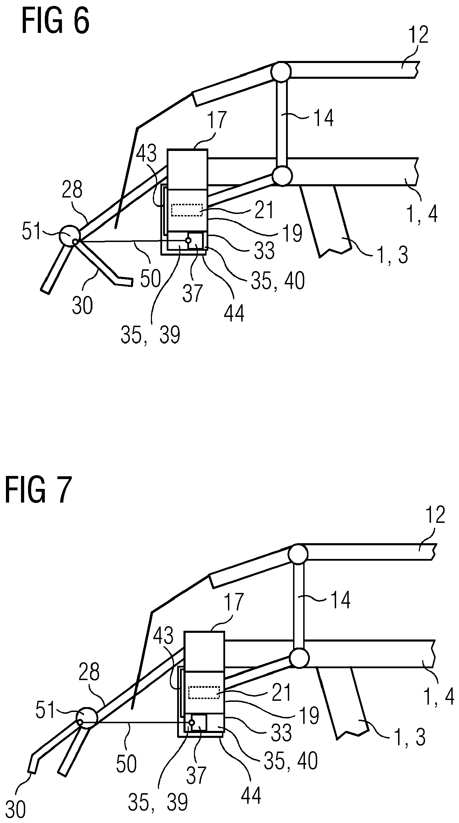

Fig. 6 zeigt ausschnittsweise eine beispielhafte dritte Ausführungsvariante einer erfindungsgemäßen Wippe eines Stromabnehmers eines Schienenfahrzeugs als schematischen Seitenriss.

Diese dritte Ausführungsvariante ähnelt jener beispielhaften zweiten Ausführungsvariante einer erfindungsgemäßen Wippe, die in Fig. 4 und Fig. 5 dargestellt ist. Es werden in Fig. 6 daher teilweise gleiche Bezugszeichen wie in Fig. 4 und Fig. 5 verwendet.

Im Unterschied zu der genannten zweiten Ausführungsvariante weist die dritte Ausführungsvariante einer erfindungsgemäßen Wippe eine Aktuatoranordnung mit einem mit einer ersten Lagervorrichtung 17 einer Lageranordnung verbundenen pneumatischen ersten Aktuator 33 auf, welcher mit einer drehbar gelagerten Kolbenstange 50 verbunden ist.

Mit der Lageranordnung, mit welcher auch ein Stromabnehmergestänge 1 und eine erste Schleifleiste 12 des Stromabnehmers verbunden sind, sind weiterhin ein erstes Auflaufhornmodul 28 und ein nicht sichtbares zweites Auflaufhornmodul fest mit der Lageranordnung verbunden. Weiterhin sind ein drittes Auflaufhornmodul 30 und ein nicht sichtbares viertes Auflaufhornmodul mittels der Aktuatoranordnung beweglich mit der Lageranordnung verbunden. Das erste Auflaufhornmodul 28 und das dritte Auflaufhornmodul 30 sind auf jener in Fig. 6 dargestellten Ansicht links an der Wippe vorgesehen. Das zweite Auflaufhornmodul und das vierte Auflaufhornmodul sind in Bezug auf jene in Fig. 6 dargestellte Ansicht rechts an der Wippe vorgesehen.

Das dritte Auflaufhornmodul 30 ist über das erste Auflaufhornmodul 28 mit der ersten Lagervorrichtung 17 verbunden. Das dritte Auflaufhornmodul 30 ist somit mit dem ersten Auflaufhornmodul 28 gekoppelt. Auf dem ersten Auflaufhornmodul 28 ist ein Drehgelenk 51 angeordnet. Über dieses Drehgelenk 51 ist das dritte Auflaufhornmodul 30 drehbar gelagert.

Mit dem Drehgelenk 51 ist die Kolbenstange 50 gelenkig gekoppelt. Dadurch werden Translationsbewegungen eines ersten Kolbens 37 des ersten Aktuators 33 in einem ersten Zylinder 35 des ersten Aktuators 33 in Rotationsbewegungen des dritten Auflaufhornmoduls 30 umgewandelt.

In Fig. 6 ist ein erster Geometriezustand der Wippe dargestellt. Eine erste Kammer 39 des ersten Zylinders 35 ist darin über eine erste Druckluftleitung 43 mit Druckluft gefüllt. Eine zweite Kammer 40 des ersten Zylinders 35 ist entlüftet. Das dritte Auflaufhornmodul 30 ist dadurch in einem eingeklappten, inaktiven Zustand. Ein erstes Wippenprofil mit einer ersten Wippenlänge ist in dem ersten Geometriezustand durch das erste Auflaufhornmodul 28 eingestellt.

Um die Wippe in einen zweiten Geometriezustand zu versetzen, wird die erste Kammer 39 des ersten Zylinders 35 entlüftet und die zweite Kammer 40 mit Druckluft gefüllt. Das dritte Auflaufhornmodul 30 wird dadurch und entsprechende Bewegungen des ersten Kolbens 37 und der Kolbenstange 50 um eine Parallele zu einer Längsachse des Schienenfahrzeugs, wie sie beispielsweise in Fig. 1 für eine beispielhafte erste Ausführungsvariante einer erfindungsgemäßen Wippe als Fahrzeuglängsachse 26 gezeigt ist, gedreht.

In dem in Fig. 7 offenbarten zweiten Geometriezustand überlagert das dritte Auflaufhornmodul 30 das erste Auflaufhornmodul 28, wodurch ein zweites Wippenprofil mit einer zweiten Wippenlänge eingestellt ist und das dritte Auflaufhornmodul 30 in einem aktiven Zustand ist.

In Fig. 7 ist ausschnittsweise jene beispielhafte dritte Ausführungsvariante einer erfindungsgemäßen Wippe als schematischer Seitenriss dargestellt, welche auch in Fig. 6 offenbart ist. Es werden daher in Fig. 7 gleiche Bezugszeichen wie in Fig. 6 verwendet.

Im Unterschied zu Fig. 6, in welcher ein erster Geometriezustand der Wippe mit einem ersten Wippenprofil offenbart ist, zeigt Fig. 7 einen zweiten Geometriezustand der Wippe mit einem im Vergleich zu dem ersten Wippenprofil breiteren zweiten Wippenprofil. Wie im Zusammenhang mit Fig. 6 beschrieben, ist der zweite Geometriezustand durch Betätigung einer fluidischen Aktuatoranordnung und Verdrehung beweglich gelagerter Auflaufhornmodule eingestellt.

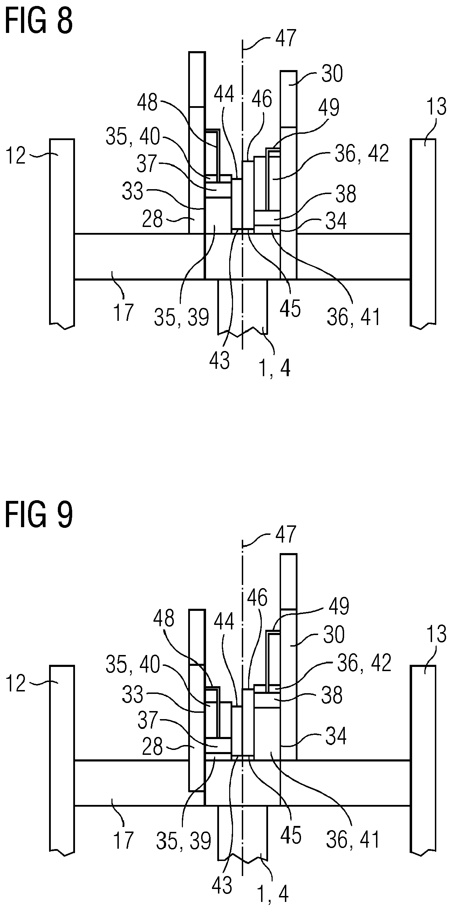

In Fig. 8 ist ein schematischer Ausschnitt aus einer beispielhaften vierten Ausführungsvariante einer erfindungsgemäßen Wippe eines Stromabnehmers eines Schienenfahrzeugs als Grundriss in einem ersten Geometriezustand dargestellt.

Die Wippe weist eine erste Schleifleiste 12 und eine zweite Schleifleiste 13 auf, welche parallel zu einer Wippenlängsachse 47 ausgerichtet sind. Die Wippenlängsachse 47 ist wiederum parallel zu einer Querachse des Schienenfahrzeugs, wie sie beispielsweise für jene beispielhafte, in Fig. 1 dargestellte erste Ausführungsvariante einer erfindungsgemäßen Wippe als Fahrzeugquerachse 25 gezeigt ist, angeordnet.

Die erste Schleifleiste 12 und die zweite Schleifleiste 13 sind gelenkig und federnd mit einer Lageranordnung verbunden, von welcher in Fig. 8 eine erste Lagervorrichtung 17 sichtbar ist.

Mit der Lageranordnung ist weiterhin ein Stromabnehmergestänge 1 verbunden, von welchem in Fig. 8 eine Scheitelstange 4 sichtbar ist.

Die Wippe weist ein erstes Auflaufhornmodul 28, ein zweites Auflaufhornmodul, ein drittes Auflaufhornmodul 30 sowie ein viertes Auflaufhornmodul auf, von welchen das zweite Auflaufhornmodul und das vierte Auflaufhornmodul nicht sichtbar sind.

Das erste Auflaufhornmodul 28 und das zweite Auflaufhornmodul sind in einem Metall als elektrische Leiter ausgebildet.

Das dritte Auflaufhornmodul 30 und das vierte Auflaufhornmodul sind in einem Kunststoff als Isolatoren ausgeführt.

Das erste Auflaufhornmodul 28 und das dritte Auflaufhornmodul 30 sind auf einer bezüglich einer aus einer Längsachse und einer Hochachse des Schienenfahrzeugs, wie sie beispielsweise im Zusammenhang mit der beispielhaften ersten Ausführungsvariante einer erfindungsgemäßen Wippe in Fig. 1 als Fahrzeuglängsachse 26 und als Fahrzeughochachse 27 gezeigt sind, gebildeten Fahrzeuglängsebene ersten Seite angeordnet, das zweite Auflaufhornmodul und das vierte Auflaufhornmodul auf einer bezüglich der Fahrzeuglängsebene zweiten Seite.

Das erste Auflaufhornmodul 28, das zweite Auflaufhornmodul, das dritte Auflaufhornmodul 30 und das vierte Auflaufhornmodul sind mittels einer Aktuatoranordnung beweglich mit der Lageranordnung gekoppelt.

Das erste Auflaufhornmodul 28 ist hierbei über einen pneumatischen ersten Aktuator 33, das dritte Auflaufhornmodul 30 über einen pneumatischen zweiten Aktuator 34 mit der ersten Lagervorrichtung 17 verbunden.

Der erste Aktuator 33 weist einen ersten Zylinder 35 und einen ersten Kolben 37 auf. Der erste Kolben 37 ist über eine erste Führungsstange 48 fest mit dem ersten Auflaufhornmodul 28 verbunden.

Der zweite Aktuator 34 weist einen zweiten Zylinder 36 und einen zweiten Kolben 38 auf. Der zweite Kolben 38 ist über eine zweite Führungsstange 49 fest mit dem dritten Auflaufhornmodul 30 verbunden.

In dem in Fig. 8 gezeigten ersten Geometriezustand der Wippe ist eine erste Kammer 39 des ersten Zylinders 35 über eine erste Druckluftleitung 43 mit Druckluft gefüllt, eine zweite Kammer 40 des ersten Zylinders 35, mit welcher eine zweite Druckluftleitung 44 verbunden ist, ist entlüftet.

Weiterhin ist in dem ersten Geometriezustand eine dritte Kammer 41 des zweiten Zylinders 36, mit welcher eine dritte Druckluftleitung 45 verbunden ist, entlüftet, eine vierte Kammer 42 des zweiten Zylinders 36 ist über eine vierte Druckluftleitung 46 mit Druckluft gefüllt.

Dadurch ist das erste Auflaufhornmodul 28 in Richtung der Wippenlängsachse 47 in eine ausgefahrene Stellung, welche einem aktiven Zustand des ersten Auflaufhornmoduls 28 entspricht, verschoben.

Das dritte Auflaufhornmodul 30 ist in Richtung der Wippenlängsachse 47 in eine eingefahrene Stellung, welche einem inaktiven Zustand des dritten Auflaufhornmoduls 30 entspricht, verschoben.

Dadurch ist ein erstes Wippenprofil mit einer ersten Wippenlänge durch das erste Auflaufhornmodul 28 eingestellt. Die erste Druckluftleitung 43, die zweite Druckluftleitung 44, die dritte Druckluftleitung 45 und die vierte Druckluftleitung 46 sind über die erste Lagervorrichtung 17 und das Stromabnehmergestänge 1, welche hohl ausgebildet sind, mit einer nicht sichtbaren Druckluftversorgungseinrichtung des Stromabnehmers verbunden.

Um einen zweiten Geometriezustand der Wippe, welcher in Fig. 9 gezeigt ist, einzustellen, wird die erste Kammer 39 des ersten Zylinders 35 entlüftet, die zweite Kammer 40 wird über die zweite Druckluftleitung 44 mit Druckluft gefüllt.

Für den zweiten Geometriezustand wird weiterhin die dritte Kammer 41 des zweiten Zylinders 36 über die dritte Druckluftleitung 45 mit Druckluft gefüllt, die vierte Kammer 42 wird entlüftet.

Dadurch wird das erste Auflaufhornmodul 28 in Richtung der Wippenlängsachse 47 in eine eingefahrene Stellung, welche einem inaktiven Zustand des ersten Auflaufhornmoduls 28 entspricht, verschoben.

Das dritte Auflaufhornmodul 30 wird dadurch in Richtung der Wippenlängsachse 47 in eine ausgefahrene Stellung, welche einem aktiven Zustand des dritten Auflaufhornmoduls 30 entspricht, verschoben.

Dadurch ist ein zweites Wippenprofil mit einer zweiten Wippenlänge durch das dritte Auflaufhornmodul 30 eingestellt.

Aus dem ersten Auflaufhornmodul 28 und dem dritten Auflaufhornmodul 30 ist somit jeweils ein eigenes vollständiges Auflaufhorn gebildet, wobei aus dem ersten Auflaufhornmodul 28 ein erstes Auflaufhorn und aus dem dritten Auflaufhornmodul 30 ein zweites Auflaufhorn gebildet ist, welche im Wechsel eingesetzt werden können.

In Fig. 9 ist ausschnittsweise jene beispielhafte vierte Ausführungsvariante einer erfindungsgemäßen Wippe als schematischer Grundriss dargestellt, welche auch in Fig. 8 offenbart ist. Es werden daher in Fig. 9 gleiche Bezugszeichen wie in Fig. 8 verwendet.

Im Unterschied zu Fig. 8, in welcher ein erster Geometriezustand der Wippe mit einem ersten Wippenprofil offenbart ist, zeigt Fig. 9 einen zweiten Geometriezustand der Wippe mit einem im Vergleich zu dem ersten Wippenprofil breiteren zweiten Wippenprofil. Wie im Zusammenhang mit Fig. 8 beschrieben, ist der zweite Geometriezustand durch Betätigung einer fluidischen Aktuatoranordnung und Verschiebung beweglich gelagerter Auflaufhornmodule eingestellt.

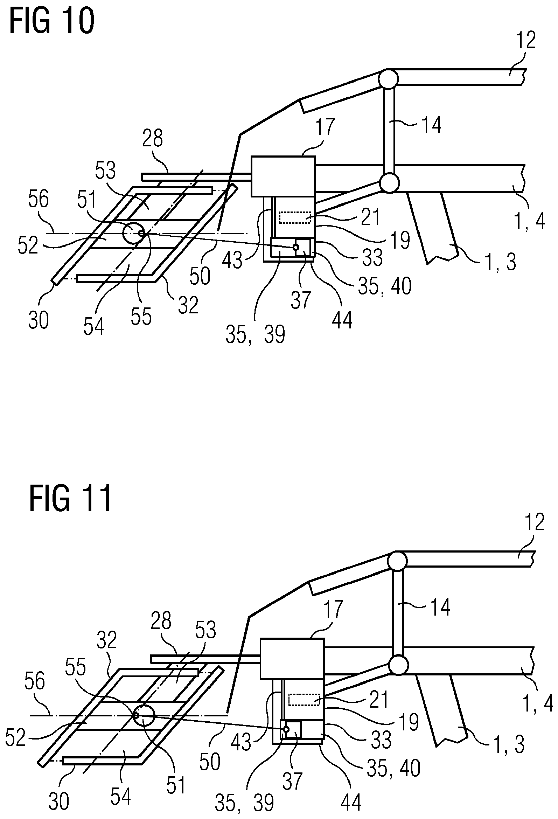

Fig. 10 offenbart einen schematischen Ausschnitt aus einer beispielhaften fünften Ausführungsvariante einer erfindungsgemäßen Wippe eines Stromabnehmers eines Schienenfahrzeugs als Seitenriss in einem ersten Geometriezustand.

Diese beispielhafte fünfte Ausführungsvariante ähnelt jener beispielhaften dritten Ausführungsvariante einer erfindungsgemäßen Wippe, welche in Fig. 6 und Fig. 7 dargestellt ist. Es werden daher in Fig. 10 teilweise gleiche Bezugszeichen wie in Fig. 6 und Fig. 7 verwendet.

Mit einer Lageranordnung der Wippe sind ein erstes Auflaufhornmodul 28 und ein nicht sichtbares zweites Auflaufhornmodul fest verbunden. Die Wippe weist weiterhin ein drittes Auflaufhornmodul 30 und ein nicht sichtbares viertes Auflaufhornmodul auf, welche beweglich mit der Lageranordnung gekoppelt sind.

Im Unterschied zu Fig. 6 umfasst die Wippe gemäß Fig. 10 ein fünftes Auflaufhornmodul 32, welches über eine erste Drehplatte 52 fest mit dem dritten Auflaufhornmodul 30 gekoppelt ist, sowie ein über eine nicht sichtbare zweite Drehplatte fest mit dem vierten Auflaufhornmodul verbundenes, nicht sichtbares sechstes Auflaufhornmodul.

Die erste Drehplatte 52 ist über eine erste Haltevorrichtung 53 drehbar mit dem ersten Auflauflaufhornmodul 28 verbunden, die zweite Drehplatte über eine nicht sichtbare zweite Haltevorrichtung drehbar mit dem zweiten Auflaufhornmodul.

Eine über eine aus einer gemeinsamen Kontur des dritten Auflaufhornmoduls 30 und des fünften Auflaufhornmoduls 32 gebildete Fläche 54 weist einen Mittelpunkt 55 auf. Von diesem Mittelpunkt 55 ist ein mit der ersten Drehplatte 52 und der ersten Haltevorrichtung 53 verbundenes Drehgelenk 51 in Richtung einer Flächenlängsachse 56 versetzt angeordnet. Das Drehgelenk 51 ist gelenkig mit einer Kolbenstange 50 verbunden, welche wiederum gelenkig mit einem ersten Kolben 37, welcher in einem ersten Zylinder 35 eines pneumatischen ersten Aktuators 33 einer Aktuatoranordnung geführt ist, verbunden ist. Der erste Aktuator 33 ist mit einer ersten Lagervorrichtung 17 der Lageranordnung verbunden. Über entsprechende Translationsbewegungen des ersten Kolbens 37 und dessen Verbindung mit der ersten Drehplatte 52 werden Rotationsbewegungen der ersten Drehplatte 52 und somit Schwenkbewegungen des dritten Auflaufhornmoduls 30 sowie des fünften Auflaufhornmoduls 32 um eine Parallele zu einer Längsachse des Schienenfahrzeugs, wie sie beispielsweise für eine beispielhafte erste Ausführungsvariante einer erfindungsgemäßen Wippe in Fig. 1 als Fahrzeuglängsachse 26 dargestellt ist, eingeleitet, wodurch entweder das dritte Auflaufhornmodul 30 oder das fünfte Auflaufhornmodul 32 in einen aktiven Zustand gesetzt wird. In Fig. 10 ist ein erster Geometriezustand der Wippe gezeigt, in welchem das dritte Auflaufhornmodul 30 in einem aktiven Zustand ist und ein erstes Wippenprofil mit einer ersten Wippenlänge eingestellt ist. Im Gegensatz dazu zeigt Fig. 11 einen zweiten Geometriezustand, in welchem das fünfte Auflaufhornmodul 32 in einem aktiven Zustand ist und ein zweites Wippenprofil mit einer zweiten Wippenlänge eingestellt ist. Die erste Drehplatte 52 ist in dem zweiten Geometriezustand in Bezug auf den ersten Geometriezustand um 180° verdreht orientiert. Aufgrund einer von dem Mittelpunkt 55 versetzten Anordnung des Drehgelenks 51 ist die zweite Wippenlänge größer als die erste Wippenlänge.

In Fig. 11 ist ausschnittsweise jene beispielhafte fünfte Ausführungsvariante einer erfindungsgemäßen Wippe als schematischer Seitenriss dargestellt, welche auch in Fig. 10 offenbart ist. Es werden daher in Fig. 11 gleiche Bezugszeichen wie in Fig. 10 verwendet.

Im Unterschied zu Fig. 10, in welcher ein erster Geometriezustand der Wippe mit einem ersten Wippenprofil offenbart ist, zeigt Fig. 11 einen zweiten Geometriezustand der Wippe mit einem im Vergleich zu dem ersten Wippenprofil breiteren zweiten Wippenprofil. Wie im Zusammenhang mit Fig. 10 beschrieben, ist der zweite Geometriezustand durch Betätigung einer fluidischen Aktuatoranordnung und durch Schwenken beweglich gelagerter Auflaufhornmodule eingestellt.

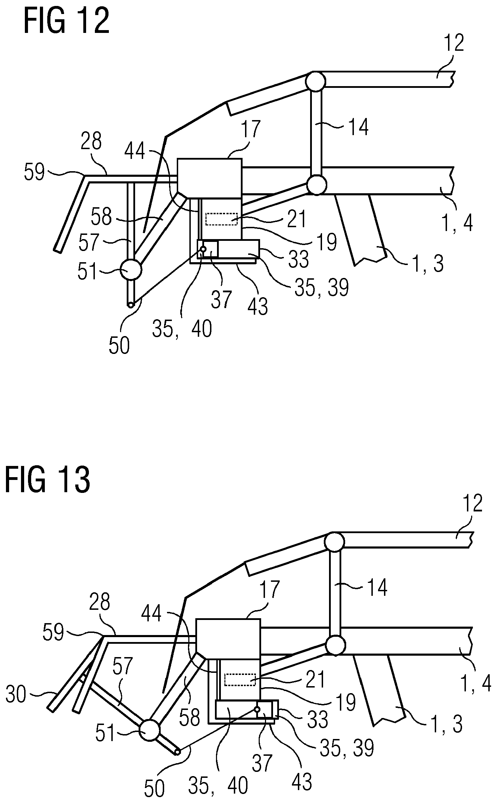

Fig. 12 offenbart einen schematischen Ausschnitt aus einer beispielhaften sechsten Ausführungsvariante einer erfindungsgemäßen Wippe eines Stromabnehmers eines Schienenfahrzeugs als Seitenriss in einem ersten Geometriezustand.

Diese beispielhafte sechste Ausführungsvariante ähnelt jener beispielhaften fünften Ausführungsvariante einer erfindungsgemäßen Wippe, welche in Fig. 10 und Fig. 11 dargestellt ist. Es werden daher in Fig. 12 teilweise gleiche Bezugszeichen wie in Fig. 10 und Fig. 11 verwendet.

Mit einer Lageranordnung der Wippe sind ein erstes Auflaufhornmodul 28 und ein nicht sichtbares zweites Auflaufhornmodul fest verbunden. Die Wippe weist weiterhin ein drittes Auflaufhornmodul 30 und ein nicht sichtbares viertes Auflaufhornmodul auf, welche beweglich mit der Lageranordnung gekoppelt sind. Das dritte Auflaufhornmodul 30 ist in Fig. 12 von dem ersten Auflaufhornmodul 28 verdeckt, jedoch in Fig. 13 sichtbar.

Im Unterschied zu Fig. 10 ist das dritte Auflaufhornmodul 30 gemäß Fig. 12 über einen Lenker 57 mit einer ersten Lagervorrichtung 17 der Lageranordnung verbunden. Der Lenker 57 ist über ein Drehgelenk 51 mit einem mit der ersten Lagervorrichtung 17 verbundenen Kragarm 58 gekoppelt.

Mit einem Ende des Lenkers 57 ist eine Kolbenstange 50 gelenkig verbunden, welche wiederum gelenkig mit einem ersten Kolben 37, welcher in einem ersten Zylinder 35 eines pneumatischen ersten Aktuators 33 einer Aktuatoranordnung geführt ist, gekoppelt ist. Zwischen dem Drehgelenk 51 und jenem Ende des Lenkers 57, mit welchem die Kolbenstange 50 verbunden ist, ist ein Abstand vorgesehen, wodurch bei einer Betätigung des Lenkers 57 durch die Kolbenstange 50 eine Hebelwirkung erzielt wird.

Der erste Aktuator 33 ist mit der ersten Lagervorrichtung 17 verbunden.

In jenem in Fig. 12 gezeigten ersten Geometriezustand ist ein erstes Wippenprofil mit einer ersten Wippenlänge durch das erste Auflaufhornmodul 28 aktiv.

Durch Betätigung des Lenkers 57 wird das dritte Auflaufhornmodul 30 aufgrund dessen Verbindung mit dem Lenker 57 um eine Parallele zu einer Längsachse des Schienenfahrzeugs, wie sie beispielsweise für eine beispielhafte erste Ausführungsvariante einer erfindungsgemäßen Wippe in Fig. 1 als Fahrzeuglängsachse 26 gezeigt ist, geschwenkt, wodurch ein zweiter Geometriezustand der Wippe erreicht wird.

In diesem zweiten Geometriezustand der Wippe, welcher in Fig. 13 gezeigt ist, ist das erste Auflaufhornmodul 28 durch das dritte Auflaufhornmodul 30 im Bereich eines Winkels 59 des ersten Auflaufhornmoduls 28 ergänzt. Dadurch ist ein zweites Wippenprofil mit einer zweiten Wippenlänge eingestellt.

In Fig. 13 ist ausschnittsweise jene beispielhafte sechste Ausführungsvariante einer erfindungsgemäßen Wippe als schematischer Seitenriss dargestellt, welche auch in Fig. 12 offenbart ist. Es werden daher in Fig. 13 teilweise gleiche Bezugszeichen wie in Fig. 12 verwendet.

Im Unterschied zu Fig. 12, in welcher ein erster Geometriezustand der Wippe mit einem ersten Wippenprofil offenbart ist, zeigt Fig. 13 einen zweiten Geometriezustand der Wippe mit einem im Vergleich zu dem ersten Wippenprofil breiteren zweiten Wippenprofil. Wie im Zusammenhang mit Fig. 12 beschrieben, ist der zweite Geometriezustand durch Betätigung einer fluidischen Aktuatoranordnung und durch Schwenken beweglich gelagerter Auflaufhornmodule eingestellt.

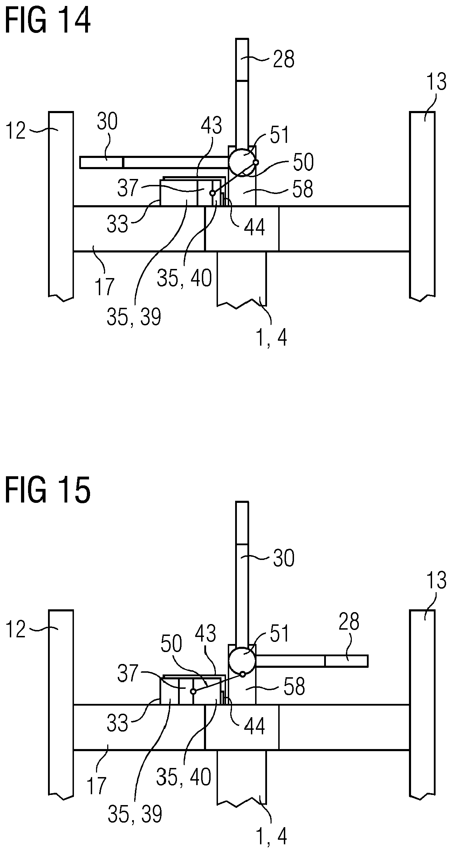

Fig. 14 zeigt einen schematischen Ausschnitt aus einer beispielhaften siebenten Ausführungsvariante einer erfindungsgemäßen Wippe eines Stromabnehmers eines Schienenfahrzeugs als Grundriss in einem ersten Geometriezustand.

Mit einer Lageranordnung der Wippe sind eine erste Schleifleiste 12, eine zweite Schleifleiste 13 sowie ein Stromabnehmergestänge 1, von welchem in Fig. 14 eine Scheitelstange 4 sichtbar ist, verbunden.

Weiterhin sind mit der Lageranordnung ein erstes Auflaufhornmodul 28, ein nicht sichtbares zweites Auflaufhornmodul, ein drittes Auflaufhornmodul 30 sowie ein nicht sichtbares viertes Auflaufhornmodul paarweise drehbar verbunden.

Das erste Auflaufhornmodul 28 und das dritte Auflaufhornmodul 30 sind auf einer ersten Seite bezüglich einer Längsebene des Schienenfahrzeugs vorgesehen, das zweite Auflaufhornmodul und das vierte Auflaufhornmodul auf einer zweiten Seite bezüglich dieser Längsebene. Die Längsebene ist durch eine Längsachse und eine Hochachse des Schienenfahrzeugs gebildet, wie sie beispielsweise in Fig. 1 für eine beispielhafte erste Ausführungsvariante einer erfindungsgemäßen Wippe als Fahrzeuglängsachse 26 und Fahrzeughochachse 27 dargestellt sind.

Das erste Auflaufhornmodul 28 und das dritte Auflaufhornmodul 30 sind über feste Verbindungen mit einem Drehgelenk 51 miteinander gekoppelt. Das Drehgelenk 51 ist auf einem Kragarm 58 vorgesehen, welcher mit einer ersten Lagervorrichtung 17 der Lageranordnung verbunden ist. Mit der ersten Lagervorrichtung 17 ist weiterhin ein pneumatischer erster Aktuator 33 einer Aktuatoranordnung verbunden. Dieser weist einen ersten Zylinder 35 auf, in welchem ein erster Kolben 37 geführt ist. Mit dem ersten Kolben 37 ist ein erstes Ende einer Kolbenstange 50 gelenkig gekoppelt, deren zweites Ende gelenkig mit dem Drehgelenk 51 verbunden ist. Durch Druckerhöhung und Druckabsenkung einer ersten Kammer 39 und einer zweiten Kammer 40 des ersten Zylinders 35 über eine erste Druckluftleitung 43 und eine zweite Druckluftleitung 44, welche über die erste Lagervorrichtung 17 und die Scheitelstange 4, welche hohl ausgebildet sind, zu einer nicht sichtbaren Druckluftversorgungseinrichtung des Schienenfahrzeugs für den Stromabnehmer geführt sind, sind das erste Auflaufhornmodul 28 und das dritte Auflaufhornmodul 30 in zwei Drehrichtungen beweglich.

Über die Kolbenstange 50 wird eine Translationsbewegung des ersten Kolbens 37 in eine Rotationsbewegung des ersten Auflaufhornmoduls 28 und des dritten Auflaufhornmoduls 30 um eine Parallele zu der Hochachse des Schienenfahrzeugs umgewandelt.

In dem in Fig. 14 gezeigten ersten Geometriezustand ist das erste Auflaufhornmodul 28 aktiv, wodurch ein erstes Wippenprofil mit einer ersten Wippenlänge eingestellt ist. Durch Rotation des ersten Auflaufhornmoduls 28 und des dritten Auflaufhornmoduls 30 um 90° wird das dritte Auflaufhornmodul 30 aktiviert und so ein zweiter Geometriezustand der Wippe, welcher in Fig. 15 gezeigt ist, eingestellt. In diesem zweiten Geometriezustand weist die Wippe ein zweites Wippenprofil mit einer im Vergleich zu dem ersten Wippenprofil größeren zweiten Wippenlänge auf.

In Fig. 15 ist ausschnittsweise jene beispielhafte siebente Ausführungsvariante einer erfindungsgemäßen Wippe als schematischer Grundriss dargestellt, welche auch in Fig. 14 offenbart ist. Es werden daher in Fig. 15 gleiche Bezugszeichen wie in Fig. 14 verwendet.

Im Unterschied zu Fig. 14, in welcher ein erster Geometriezustand der Wippe mit einem ersten Wippenprofil offenbart ist, zeigt Fig. 15 einen zweiten Geometriezustand der Wippe mit einem im Vergleich zu dem ersten Wippenprofil breiteren zweiten Wippenprofil. Wie im Zusammenhang mit Fig. 14 beschrieben, ist der zweite Geometriezustand durch Betätigung einer fluidischen Aktuatoranordnung und Rotation beweglich gelagerter Auflaufhornmodule eingestellt.

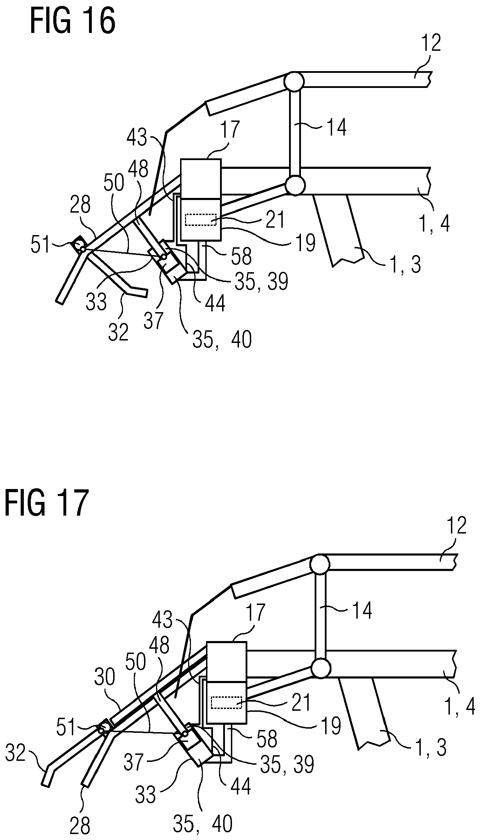

In Fig. 16 ist ein schematischer Ausschnitt aus einer beispielhaften achten Ausführungsvariante einer erfindungsgemäßen Wippe eines Stromabnehmers eines Schienenfahrzeugs als Seitenriss in einem ersten Geometriezustand gezeigt.

Die beispielhafte achte Ausführungsvariante ähnelt jener beispielhaften zweiten Ausführungsvariante und jener beispielhaften dritten Ausführungsvariante einer erfindungsgemäßen Wippe, welche in Fig. 4, Fig. 5, Fig. 6 und Fig. 7 dargestellt sind. Es werden daher in Fig. 16 teilweise gleiche Bezugszeichen wie in Fig. 4, Fig. 5, Fig. 6 und Fig. 7 verwendet.

Im Unterschied zu Fig. 4, Fig. 5, Fig. 6 und Fig. 7 weist die Wippe gemäß Fig. 16 je Wippenseite drei Auflaufhornmodule auf, von denen ein Auflaufhornmodul fest und zwei Auflaufhornmodule beweglich mit einer Lageranordnung der Wippe verbunden sind, wobei die beiden beweglich mit der Lageranordnung verbundenen Auflaufhornmodule von einem einzigen Aktuator einer Aktuatoranordnung betätigt werden. Die Wippe weist demnach ein erstes Auflaufhornmodul 28, ein zweites Auflaufhornmodul, ein drittes Auflaufhornmodul 30, ein viertes Auflaufhornmodul, ein fünftes Auflaufhornmodul 32 sowie ein sechstes Auflaufhornmodul auf.

Das erste Auflaufhornmodul 28, das dritte Auflaufhornmodul 30 und das fünfte Auflaufhornmodul 32 sind auf einer ersten Seite bezüglich einer Fahrzeuglängsebene vorgesehen. Das dritte Auflaufhornmodul 30 ist in Fig. 16 von dem ersten Auflaufhornmodul 28 verdeckt, in Fig. 17 jedoch sichtbar.

Das zweite Auflaufhornmodul, das vierte Auflaufhornmodul und das sechste Auflaufhornmodul sind, nicht sichtbar, auf einer zweiten Seite bezüglich der Fahrzeuglängsebene vorgesehen. Die Fahrzeuglängsebene ist aus einer Längsachse und einer Hochachse des Schienenfahrzeugs, wie sie beispielsweise in Fig. 1 für eine beispielhafte erste Ausführungsvariante einer erfindungsgemäßen Wippe als Fahrzeuglängsachse 26 und als Fahrzeughochachse 27 dargestellt sind, gebildet.

Das erste Auflaufhornmodul 28 ist fest mit einer ersten Lagervorrichtung 17 der Lageranordnung verbunden. Das dritte Auflaufhornmodul 30 und das fünfte Auflaufhornmodul 32 sind über einen pneumatischen ersten Aktuator 33 der Aktuatoranordnung beweglich mit der ersten Lagervorrichtung 17 gekoppelt.

Der erste Aktuator 33 ist über einen Kragarm 58 mit der ersten Lagervorrichtung 17 verbunden und weist einen ersten Zylinder 35 auf, in welchem ein erster Kolben 37 geführt ist.

Der erste Kolben 37 ist über Druckerhöhungs- und Druckabsenkungsvorgänge einer ersten Kammer 39 und einer zweiten Kammer 40 des ersten Zylinders 35, welche über eine erste Druckluftleitung 43 und eine zweite Druckluftleitung 44, welche mit einer nicht sichtbaren Druckluftversorgungseinrichtung des Stromabnehmers verbunden sind, sowie nicht sichtbare Ventile durchgeführt werden, in zwei Richtungen verschieblich.

Mit dem ersten Kolben 37 ist eine erste Führungsstange 48 fest verbunden, welche wiederum fest mit dem dritten Auflaufhornmodul 30 verbunden ist. Durch Betätigung des ersten Kolbens 37 mittels der genannten Druckerhöhungs- und Druckabsenkungsvorgänge wird das dritte Auflaufhornmodul 30 in Richtung der Hochachse des Schienenfahrzeugs und einer Querachse des Schienenfahrzeugs, wie sie in Fig. 1 beispielsweise für die beispielhafte erste Ausführungsvariante einer erfindungsgemäßen Wippe als Fahrzeugquerachse 25 gezeigt ist, (in Bezug auf jene in Fig. 16 gezeigte Ansicht schräg nach unten/oben) verschoben, wodurch es ein- und ausgefahren werden kann.

Mit dem ersten Kolben 37 sowie einem Drehgelenk 51 ist eine Kolbenstange 50 gelenkig verbunden.

Das Drehgelenk 51 ist auf dem ersten Auflaufhornmodul 28 gelagert und mit dem fünften Auflaufhornmodul 32 gekoppelt, wodurch das fünfte Auflaufhornmodul 32 bei Betätigung des ersten Kolbens 37 und der Kolbenstange 50 durch die genannten Druckerhöhungs- und Druckabsenkungsvorgänge um eine Parallele zu der Längsachse des Schienenfahrzeugs verdreht und so ein- und ausgeklappt werden kann.

In dem in Fig. 16 gezeigten ersten Geometriezustand sind das dritte Auflaufhornmodul 30 und das fünfte Auflaufhornmodul 32 eingefahren und eingeklappt, d.h. inaktiv. Ein erstes Wippenprofil mit einer ersten Wippenlänge ist aus dem ersten Auflaufhornmodul 28 gebildet. Das erste Auflaufhornmodul 28 fungiert als erstes Auflaufhorn mit einer ersten Kontur.

In dem in Fig. 17 gezeigten zweiten Geometriezustand sind das dritte Auflaufhornmodul 30 und das fünfte Auflaufhornmodul 32 ausgefahren und ausgeklappt, d.h. aktiv. Ein zweites Wippenprofil mit einer zweiten Wippenlänge, welche größer als die erste Wippenlänge ist, ist aus dem dritten Auflaufhornmodul 30 und dem fünften Auflaufhornmodul 32 gebildet. Das dritte Auflaufhornmodul 30 und das fünfte Auflaufhornmodul 32 sind zu einem zweiten Auflaufhorn mit einer zweiten Kontur, welche sich von der ersten Kontur unterscheidet, zusammengesetzt. Das zweite Auflaufhorn ist somit aus dem dritten Auflaufhornmodul 30 und dem fünften Auflaufhornmodul 32 gebildet.

Das dritte Auflaufhornmodul 30 und das fünfte Auflaufhornmodul 32 sind über den ersten Aktuator 33 miteinander kinematisch gekoppelt. Erfindungsgemäß ist es auch vorstellbar, dass zwischen dem ersten Aktuator 33 einerseits und dem dritten Auflaufhornmodul 30 sowie dem fünften Auflaufhornmodul 32 andererseits ein Getriebe vorgesehen ist. Weiterhin ist es denkbar, dass das dritte Auflaufhornmodul 30 und das fünfte Auflaufhornmodul 32 als Glieder eines Kettentriebs miteinander kinematisch verbunden sind.

In Fig. 17 ist ausschnittsweise jene beispielhafte achte Ausführungsvariante einer erfindungsgemäßen Wippe als schematischer Seitenriss dargestellt, welche auch in Fig. 16 offenbart ist. Es werden daher in Fig. 17 teilweise gleiche Bezugszeichen wie in Fig. 16 verwendet.

Im Unterschied zu Fig. 16, in welcher ein erster Geometriezustand der Wippe mit einem ersten Wippenprofil offenbart ist, zeigt Fig. 17 einen zweiten Geometriezustand der Wippe mit einem im Vergleich zu dem ersten Wippenprofil breiteren zweiten Wippenprofil. Wie im Zusammenhang mit Fig. 16 beschrieben, ist der zweite Geometriezustand durch Betätigung einer fluidischen Aktuatoranordnung sowie Translation und Rotation beweglich gelagerter Auflaufhornmodule eingestellt.

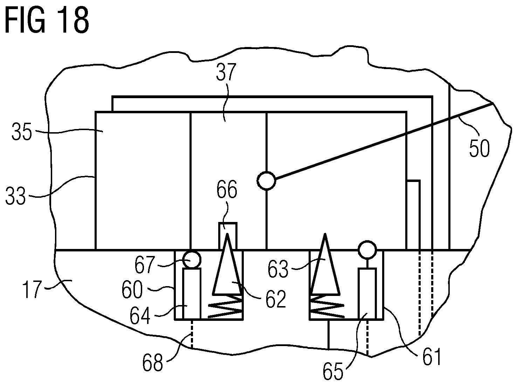

Fig. 18 zeigt einen schematischen Ausschnitt aus einer beispielhaften Ausführungsvariante einer erfindungsgemäßen Wippe eines Stromabnehmers eines Schienenfahrzeugs mit einem fluidischen ersten Aktuator 33 einer Aktuatoranordnung, wie sie beispielsweise in Fig. 1 bis Fig. 17 dargestellt ist.

Mittels des ersten Aktuators 33 wird, wie z.B. im Zusammenhang mit Fig. 1 bis Fig. 17 beschrieben, ein in Fig. 18 nicht sichtbares Auflaufhornmodul des Stromabnehmers, welches über eine Kolbenstange 50 mit dem ersten Aktuator 33 verbunden ist, eingestellt. Die Aktuatoranordnung weist weitere, nicht dargestellte Aktuatoren auf, mittels welchen weitere, ebenfalls nicht gezeigte Auflaufhornmodule eingestellt werden.

Der erste Aktuator 33 ist als pneumatischer Aktuator ausgeführt. Erfindungsgemäß ist es jedoch auch denkbar, dass der erste Aktuator 33 z.B. als hydraulischer Aktuator ausgebildet ist.

Auf den ersten Aktuator 33 wirken eine Verriegelungseinrichtung und eine Endlagenüberwachungseinrichtung, mittels welchen das Auflaufhornmodul in seinen Endlagen verriegelt und eine Einhaltung dieser Endlagen überwacht wird.

Jene Aktuatoren, die im Zusammenhang mit Fig. 1 bis Fig. 17 beschrieben sind, weisen ebenfalls Verriegelungseinrichtungen und Endlagenüberwachungseinrichtungen auf, wie sie in Fig. 18 gezeigt sind. Erfindungsgemäß ist es jedoch auch vorstellbar, dass die Verriegelungseinrichtungen und die Endlagenüberwachungseinrichtungen nicht auf die Aktuatoren wirken, sondern unmittelbar auf Auflaufhornmodule bzw.

Auflaufhörner. Beispielsweise können für die Auflaufhornmodule mit der Wippe verbundene Fangschuhe vorgesehen sein, in welchen die Verriegelungseinrichtungen und die Endlagenüberwachungseinrichtungen vorgesehen sind.

An den ersten Aktuator 33 angrenzend sind ein erstes Endlagenmodul 60 und ein zweites Endlagenmodul 61 vorgesehen, welche als Schächte in einer ersten Lagervorrichtung 17 einer Lageranordnung der Wippe ausgebildet sind.

Über das erste Endlagenmodul 60 wird das Auflaufhornmodul in einer ersten Endlage (z.B. in einem eingeklappten, inaktiven Zustand) verriegelt und überwacht, über das zweite Endlagenmodul 61 in einer zweiten Endlage (z.B. in einem ausgeklappten, aktiven Zustand) verriegelt und überwacht.

Das erste Endlagenmodul 60 weist einen gefederten ersten Schnappverschluss 62 sowie einen pneumatischen ersten Rollhebel-Endlagenschalter 64 auf, das zweite Endlagenmodul 61 einen gefederten zweiten Schnappverschluss 63 sowie einen pneumatischen zweiten Rollhebel-Endlagenschalter 65.

Gleitet ein erster Kolben 37, welcher in einem ersten Zylinder 35 des ersten Aktuators 33 geführt ist, über das erste Endlagenmodul 60, so rastet der erste Schnappverschluss 62 in eine Nut 66 des ersten Kolbens 37 ein und es erfolgt eine Verriegelung des ersten Kolbens 37 bzw. des Auflaufhornmoduls. Ein Rollhebel 67 des ersten Rollhebel-Endlagenschalters 64 wird im Moment der Verriegelung von dem ersten Kolben 37 gedrückt, wodurch über eine pneumatische Signalleitung 68 ein von dem ersten Rollhebel-Endlagenschalter 64 gebildetes Druckluftsignal an eine nicht gezeigte Auswerteeinheit übermittelt wird, anhand dessen die erste Endlage detektiert wird.

Um den ersten Kolben 37 zu lösen, wird dieser mittels eines entsprechenden Drucks in dem ersten Zylinder 35 gegen einen Widerstand des gefederten ersten Schnappverschlusses 62 in Richtung des zweiten Endlagenmoduls 61 bewegt.

Dabei wird der Rollhebel 67 freigegeben und es wird über den ersten Rollhebel-Endlagenschalter 64 ein Druckluftsignal gebildet sowie über die Signalleitung 68 übermittelt, welches anzeigt, dass der erste Kolben 37 bzw. das Auflaufhornmodul nicht in der ersten Endlage ist.

Das zweite Endlagenmodul 61 ist im Hinblick auf seine Funktion gleich wie das erste Endlagenmodul 60 ausgebildet.

### Liste der Bezeichnungen

1 Stromabnehmergestänge
2 Unterarm
3 Oberarm
4 Scheitelstange
5 Parallelführungsstange
6 Kuppelstange
7 Grundrahmen
8 Erster Stützisolator
9 Zweiter Stützisolator
10 Dach
11 Hebeantrieb
12 Erste Schleifleiste
13 Zweite Schleifleiste
14 Erste Hebelanordnung
15 Zweite Hebelanordnung
16 Dritte Hebelanordnung
17 Erste Lagervorrichtung
18 Zweite Lagervorrichtung
19 Erstes Gehäuse
20 Zweites Gehäuse
21 Erste Torsionsfeder
22 Zweite Torsionsfeder
23 Dritte Torsionsfeder
24 Fahrdraht
25 Fahrzeugquerachse
26 Fahrzeuglängsachse
27 Fahrzeughochachse
28 Erstes Auflaufhornmodul
29 Zweites Auflaufhornmodul
30 Drittes Auflaufhornmodul
31 Viertes Auflaufhornmodul
32 Fünftes Auflaufhornmodul
33 Erster Aktuator
34 Zweiter Aktuator
35 Erster Zylinder
36 Zweiter Zylinder
37 Erster Kolben
38 Zweiter Kolben
39 Erste Kammer
40 Zweite Kammer
41 Dritte Kammer
42 Vierte Kammer
43 Erste Druckluftleitung
44 Zweite Druckluftleitung
45 Dritte Druckluftleitung
46 Vierte Druckluftleitung
47 Wippenlängsachse
48 Erste Führungsstange
49 Zweite Führungsstange
50 Kolbenstange
51 Drehgelenk
52 Erste Drehplatte
53 Erste Haltevorrichtung
54 Fläche
55 Mittelpunkt
56 Flächenlängsachse
57 Lenker
58 Kragarm
59 Winkel
60 Erstes Endlagenmodul
61 Zweites Endlagenmodul
62 Erster Schnappverschluss
63 Zweiter Schnappverschluss
64 Erster Rollhebel-Endlagenschalter
65 Zweiter Rollhebel-Endlagenschalter
66 Nut
67 Rollhebel
68 Signalleitung

## Patentansprüche

1. Wippe für einen Stromabnehmer eines Fahrzeugs, insbesondere eines Schienenfahrzeugs, mit zumindest einer ersten Schleifleiste (12), welche mit einer Lageranordnung mit einer ersten Lagervorrichtung (17) und einer zweiten Lagervorrichtung (18) gekoppelt ist, sowie mit einem auf einer bezüglich einer aus einer Fahrzeuglängsachse (26) und einer Fahrzeughochachse (27) gebildeten Fahrzeuglängsebene ersten Seite angeordneten ersten Auflaufhornmodul (28) und einem auf einer bezüglich der Fahrzeuglängsebene zweiten Seite angeordneten zweiten Auflaufhornmodul (29), welche fest oder mittels einer Aktuatoranordnung beweglich mit der Lageranordnung verbunden sind, wobei die Lageranordnung mit einem Stromabnehmergestänge (1) verbindbar ist, **dadurch gekennzeichnet, dass** zumindest ein auf der ersten Seite angeordnetes drittes Auflaufhornmodul (30) und ein auf der zweiten Seite angeordnetes viertes Auflaufhornmodul (31) mittels der Aktuatoranordnung beweglich mit der Lageranordnung verbunden sind, wobei das erste Auflaufhornmodul (28), das zweite Auflaufhornmodul (29), das dritte Auflaufhornmodul (30) und das vierte Auflaufhornmodul (31) unabhängig von der zumindest ersten Schleifleiste (12) mit der Lageranordnung verbunden sind.

2. Wippe nach Anspruch 1, **dadurch gekennzeichnet, dass** die Aktuatoranordnung getrennt von der zumindest ersten Schleifleiste (12) mit der Lageranordnung verbunden ist.

3. Wippe nach Anspruch 1 oder 2, **dadurch gekennzeichnet, dass** zumindest das dritte Auflaufhornmodul (30) zumindest in Richtung einer Fahrzeugquerachse (25) verschieblich mit der Lageranordnung verbunden ist.

4. Wippe nach einem der Ansprüche 1 bis 3, **dadurch gekennzeichnet, dass** zumindest das dritte Auflaufhornmodul (30) zumindest in Richtung der Fahrzeughochachse (27) verschieblich mit der Lageranordnung verbunden ist.

5. Wippe nach einem der Ansprüche 1 bis 4, **dadurch gekennzeichnet, dass** zumindest das dritte Auflaufhornmodul (30) um eine Parallele der Fahrzeuglängsachse (26) drehbar mit der Lageranordnung verbunden ist.

6. Wippe nach einem der Ansprüche 1 bis 5, **dadurch gekennzeichnet, dass** zumindest das dritte Auflaufhornmodul (30) um eine Parallele der Fahrzeughochachse (27) drehbar mit der Lageranordnung verbunden ist.

7. Wippe nach einem der Ansprüche 1 bis 6, **dadurch gekennzeichnet, dass** zumindest das dritte Auflaufhornmodul (30) schwenkbar mit der Lageranordnung verbunden ist.

8. Wippe nach einem der Ansprüche 1 bis 7, **dadurch gekennzeichnet, dass** zumindest aus dem ersten Auflaufhornmodul (28) und dem dritten Auflaufhornmodul (30) jeweils ein eigenes Auflaufhorn gebildet ist, wobei aus dem ersten Auflaufhornmodul (28) ein erstes Auflaufhorn gebildet ist und aus dem dritten Auflaufhornmodul (30) ein zweites Auflaufhorn gebildet ist.

9. Wippe nach einem der Ansprüche 1 bis 7, **dadurch gekennzeichnet, dass** zumindest aus dem ersten Auflaufhornmodul (28) und dem dritten Auflaufhornmodul (30) eine Auflaufhornkontur zusammengesetzt ist.

10. Wippe nach einem der Ansprüche 1 bis 9, **dadurch gekennzeichnet, dass** die Aktuatoranordnung zumindest einen fluidischen ersten Aktuator (33) aufweist.

11. Wippe nach einem der Ansprüche 1 bis 10, **dadurch gekennzeichnet, dass** zumindest das dritte Auflaufhornmodul (30) und das vierte Auflaufhornmodul (31) in Endlagen verriegelbar ausgeführt sind und eine Endlagenüberwachungseinrichtung vorgesehen ist.

12. Wippe nach einem der Ansprüche 1 bis 11, **dadurch gekennzeichnet, dass** zumindest das dritte Auflaufhornmodul (30) fluidisch betätigbar ausgebildet ist.

13. Wippe nach einem der Ansprüche 1 bis 12, **dadurch gekennzeichnet, dass** zumindest das erste Auflaufhornmodul (28) und das dritte Auflaufhornmodul (30) miteinander gekoppelt sind.

14. Wippe nach einem der Ansprüche 1 bis 13, **dadurch gekennzeichnet, dass** zumindest eines der Auflaufhornmodule als Isolator ausgebildet ist.

15. Stromabnehmer mit einer Wippe nach einem der Ansprüche 1 bis 14.
